# EUROPÄISCHE PATENTSCHRIFT

(11) **EP 1 819 998 B1**
(45) Veröffentlichungstag und Bekanntmachung des Hinweises auf die Patenterteilung: **11.01.2012**
(21) Anmeldenummer: 05807969.0
(22) Anmeldetag: 15.11.2005
(51) Int. Cl.: G01M 3/20

(54) **Lecksuchgerät**
Leak-sensing device
Detecteur de fuites

(30) Priorität: 10.12.2004 DE 102004059485
(43) Veröffentlichungstag der Anmeldung: 22.08.2007
(73) Patentinhaber: Inficon GmbH, 50968 Köln (DE)
(72) Erfinder: BÖHM, Thomas, 50859 Köln (DE)
(74) Vertreter: von Kreisler Selting Werner
(86) Internationale Anmeldenummer: PCT/EP2005/055992
(87) Internationale Veröffentlichungsnummer: WO 2006/061311

(56) Entgegenhaltungen:
- GB-A- 1 489 953
- US-A- 5 356 594
- US-A- 5 356 594
- US-A1- 2004 194 533

## Beschreibung

Die Erfindung betrifft ein Lecksuchgerät mit einer Schnüffelsonde und einem Testgassensor.

Lecksuchgeräte dienen dazu, an Testobjekten, die ein Testgas, z.B. Helium, enthalten, Lecks festzustellen. Bekannt sind Lecksuchgeräte, die eine in der Hand zu haltende Schnüffelspitze aufweisen. Durch die Schnüffelsonde hindurch wird Gas angesaugt und einem Testgassensor zugeführt. Die Geräte benötigen eine Vakuumpumpe, die in der Regel in einem Standgerät, d.h. einem auf dem Boden oder einem Tisch stehenden Grundgerät, untergebracht ist. Das Grundgerät enthält häufig auch den Testgasdetektor. Hierbei kann es sich um ein Massenspektrometer handeln oder um einen baulich kleineren Infrarot-Gasanalysator.

Normalerweise ist die Schnüffelsonde über eine Kapillarleitung mit dem Grundgerät verbunden. Es ist dann für eine Bedienperson relativ einfach, die Schnüffelsonde in der Nähe des Testobjekts zu bewegen und dadurch leckverdächtige Stellen abzusuchen. Derartige Lecksuchgeräte haben jedoch eine höhere Ansprechzeit. Dies ist die Zeit zwischen dem Ansaugen _des Leckgases und der Anzeige. Die Ansprechzeit wird durch die Länge der Schnüffelleitung, typischerweise 5 Meter, bestimmt. Hinzu kommt die Ansprechzeit des Testgasdetektors.

WO 03/008923 A2 beschreibt einen Schnüffellecksucher, bei dem der Testgasdetektor in ein Handstück integriert wurde, an welchem die Schnüffelsonde angebracht ist. Das Handstück kann über eine Leitung mit dem auf dem Tisch oder Boden stehenden Grundgerät verbunden sein, wobei das Grundgerät unter anderem die Vakuumpumpe und eine Anzeigevorrichtung aufweist. Dieses Lecksuchgerät hat wegen der Nähe der Ansaugöffnung der Schnüffelsonde einerseits und des Testgasdetektors andererseits eine kurze Ansprechzeit. Allerdings wird das Handstück mit der darin enthaltenen Sensorik groß und schwer, so dass die Benutzung des Lecksuchgerätes für den Bediener im Dauerbetrieb ermüdend ist. Außerdem sind durch das voluminöse Handstück beengte Stellen des Testobjekts schwer zugänglich.

Ein Lecksuchgerät nach dem Oberbegriff des Patentanspruchs 1 ist beschrieben in US 5 356 594. Dieses Lecksuchgerät weist eine handgeführte Schnüffelsonde auf, die über eine Kapillarleitung mit einem Tragegerät verbunden ist. Das Tragegerät ist an einem am Körper einer Bedienungsperson zu tragenden Halter befestigt. Es enthält eine Pumpe, die durch die Schnüffelsonde hindurch Gas ansaugt und dieses einer Analysekammer zuführt. Die Analysekammer und die Pumpe sind in dem Tragegerät untergebracht, so dass die Größe der verwendeten Pumpe durch das Tragegerät begrenzt ist.

Der Erfindung liegt die Aufgabe zugrunde, ein Lecksuchgerät mit handgeführter Schnüffelsonde zu schaffen, das einerseits eine relativ kurze Ansprechzeit hat und andererseits ermüdungsfrei zu bedienen ist.

Das Lecksuchgerät nach der vorliegenden Erfindung weist die Merkmale des Patentanspruchs 1 auf. Es besteht aus einem Testgasdetektor, der an einem Halter befestigt ist, welcher am Körper einer Bedienperson getragen werden kann, und der Schnüffelsonde, die beweglich über eine flexible Kapillarleitung mit der Schnüffelspitze verbunden ist. Die Schnüffelspitze kann dabei sehr klein und leichtgewichtig ausgebildet werden, so dass sie von der Bedienperson leicht gehalten und an die gewünschten Stellen geführt werden kann. Das Bewegen der Schnüffelspitze ist auch bei länger dauerndem Betrieb ermüdungsfrei möglich. Von der Schnüffelsonde führt die relativ kurze Kapillarleitung, die eine Länge von etwa 1 Meter hat, zu einem Tragegerät, das an dem Körper der Bedienperson befestigt wird. Der hierfür benötigte Halter ist beispielsweise ein Gürtel, an dem das Tragegerät angebracht werden kann, ohne die Bedienperson in ihrer Bewegung zu behindern. Die erforderliche Kapillarleitung verringert zwar geringfügig die Ansprechzeit, jedoch ist ihre Länge so gering, dass dies nicht wesentlich ins Gewicht fällt.

Die für das Ansaugen des Gases erforderliche Vakuumpumpe kann in einem Grundgerät, das als Standgerät ausgebildet ist, untergebracht werden. Das Grundgerät ist über eine flexible Leitung, die sowohl eine Kapillarleitung, als auch elektrische Leitungen enthält, mit dem Tragegerät verbunden. Die Länge dieser Leitung vergrößert nicht die Ansprechzeit. Alternativ besteht auch die Möglichkeit, eine Vakuumpumpe in das Tragegerät zu integrieren. In diesem Fall erhöhen sich allerdings Volumen und Gewicht des Tragegerätes.

Die Schnüffelsonde kann ein Stift mit einer Länge von maximal 15 cm und einem Durchmesser von maximal 15 mm sein. Der Stift kann auch mit einem abstehenden Handgriff ausgestattet und somit pistolenartig ausgebildet sein. Ein Schalter zum manuellen Einleiten der Testaktion kann ebenfalls an der Schnüffelsonde vorgesehen sein.

Als Testgassensor, der in dem Tragegerät am Körper zu tragen ist, eignet sich besonders ein Infrarot-Gasanalysator.

Im Folgenden wird unter Bezugnahme auf die Zeichnungen ein Ausführungsbeispiel der Erfindung näher erläutert.

Es zeigen:
- Figur 1: eine Darstellung einer Bedienperson bei der Lecksuche mit dem erfindungsgemäßen Lecksuchgerät,
- Figur 2: eine schematische Darstellung des Lecksuchgerätes, und
- Figur 3: den im Tragegerät enthaltenen Testgasdetektor.

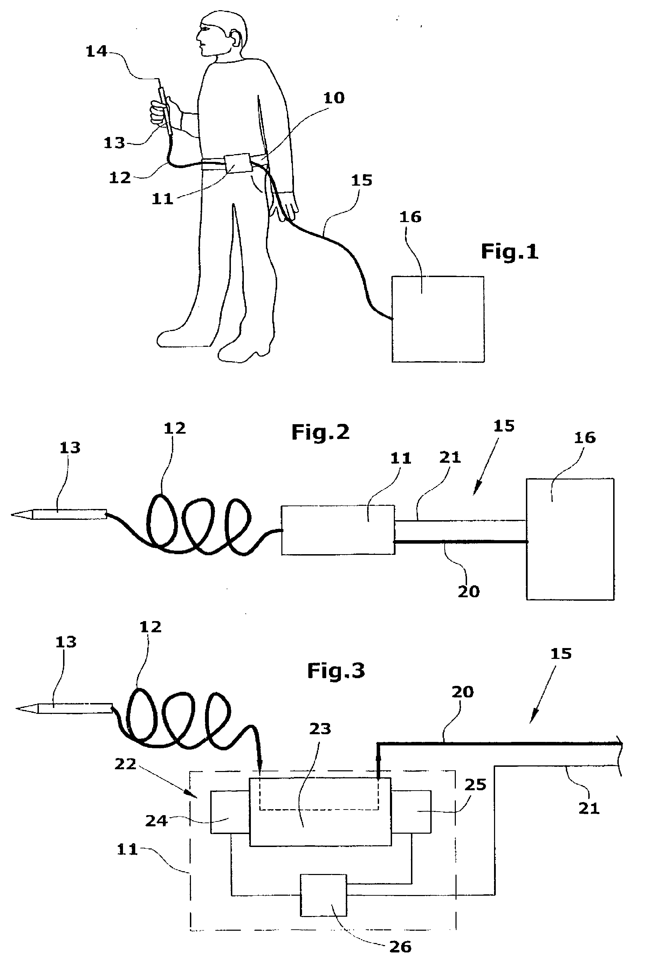

Gemäß Figur 1 trägt eine Bedienperson an einem Halter 10 ein Tragegerät 11. Bei dem Halter handelt es sich um einen einfachen Gürtel, an dem das Tragegerät 11 aufgehängt ist. Von dem Tragegerät 11 führt eine Kapillarleitung 12 zu einer Schnüffelsonde 13. Die Schnüffelsonde ist hier als länglicher Stift von etwa Kugelschreiberformat ausgebildet. An ihrer Spitze befindet sich ein Saugeinlass 14, durch den Gas eingesaugt wird. Die Kapillarleitung 12 ist flexibel, so dass die Schnüffelsonde 13 hinderungsfrei bewegt werden kann.

Von dem Tragegerät 11 führt eine flexible Leitung 15 zu einem als Standgerät ausgebildeten Grundgerät 16, welches eine Vakuumpumpe, sowie Steuereinrichtungen und eine Anzeigeeinrichtung, sowie ggf. Alarmeinrichtungen enthält. Die flexible Leitung 15 enthält u.a. eine Kapillarleitung, Stromversorgungsleitungen und Signalleitungen.

Figur 2 zeigt die Schnüffelsonde 13, die über eine flexible Kapillarleitung 12 mit dem Tragegerät 11 verbunden ist. Die flexible Leitung 15, die das Tragegerät 11 mit dem Grundgerät 16 verbindet, enthält eine Kapillarleitung 20, sowie elektrische Leitungen 21.

Das Tragegerät 11 enthält den in Figur 3 dargestellten Testgasdetektor 22. Dabei handelt es sich um einen Infrarot-Gasanalysator, der eine Küvette 23 aufweist, die in Längsrichtung von dem angesaugten Gas durchströmt wird. Der Gaseinlass der Küvette ist mit der Kapillarleitung 12 verbunden und der Gasauslass mit der Kapillarleitung 20. An dem einen stirnseitigen Ende der Küvette 23 befindet sich eine Infrarotlichtquelle 24 und an dem anderen Ende ein Infrarotdetektor 25. Die Signale des Infrarotdetektors 25 werden von einem Mikroprozessor 26 ausgewertet und an das Grundgerät 16 übertragen.

Generell wird durch die Schnüffelsonde 13 Umgebungsluft in das Tragegerät 11 eingesaugt. Hat das Testobjekt, in dem sich ein Testgas befindet, ein Leck, so gelangt Testgas in die Umgebungsluft. Der Testgasdetektor 22 spricht selektiv auf die Anwesenheit von Testgas an, so dass die Anwesenheit eines Lecks erkannt wird.

## Patentansprüche

1. Lecksuchgerät mit einer Schnüffelsonde (13) und einem Testgasdetektor (22), wobei der Testgasdetektor (22) in einem Tragegerät (11) untergebracht ist, welches an einem am Körper einer Bedienperson zu tragenden Halter (10) befestigt und über eine flexible Kapillarleitung (12) mit der Schnüffelsonde (13) verbunden ist,
**dadurch gekennzeichnet,**
**dass** das Tragegerät durch eine flexible Leitung (15) mit einem Grundgerät (16) verbunden ist, welches eine Vakuumpumpe enthält, und dass die flexible Leitung (15) eine Kapillarleitung (20) aufweist.

2. Lecksuchgerät nach Anspruch 1, **dadurch gekennzeichnet, dass** die Schnüffelsonde (13) ein Stift mit einer Länge von maximal 15 cm und einem Durchmesser von maximal 15 mm ist.

3. Lecksuchgerät nach Anspruch 1 oder 2, **dadurch gekennzeichnet, dass** der Testgasdetektor (22) ein Infrarot-Gasanalysator ist.

## Claims

1. A leak detecting device comprising a sniffing probe (13) and a test gas detector (22), wherein the test gas detector (22) is accommodated in a carrying device (11) fastened to a holder (10) to be carried on the body of an operating person, and is connected with the sniffing probe (13) via a flexible capillary line (12),
**characterized in that**
the carrying device is connected with a basic device (16) via a flexible line (15), which basic device comprises a vacuum pump, and the flexible line (15) comprises a capillary line (20).

2. The leak detecting device according to claim 1, **characterized in that** the sniffing probe (13) is a pin having a maximum length of 15 cm and a maximum diameter of 15 mm.

3. The leak detecting device according to claim 1 or 2, wherein the test gas detector (22) is an infrared gas analyzer.

## Revendications

1. Détecteur de fuites comprenant une sonde renifleuse (13) et un détecteur de gaz de test (22), ledit détecteur de gaz de test (22) étant accommodé dans un dispositif de portage (11) monté dans un support (10) destiné à être porté sur le corps d'un utilisateur, et connecté à la sonde renifleuse (13) par un conduit capillaire (12) flexible,
**caractérisé en ce**
**que** ledit dispositif de portage est connecté à un dispositif de base (16) par un conduit flexible (15), le dispositif de base comprenant une pompe à vide, et que le conduit flexible (15) comprend un conduit capillaire (20).

2. Détecteur de fuites selon la revendication 1, **caractérisé en ce que** la sonde renifleuse (13) est une goupille d'une longueur maximale de 15 cm et d'un diamètre maximal de 15 mm.

3. Détecteur de fuites selon les revendications 1 ou 2, **caractérisé en ce que** le détecteur de gaz de test (22) est un analyseur de gaz à infrarouge.
